# EUROPEAN PATENT APPLICATION

(11) **EP 3 678 424 A1**
(43) Date of publication of application: **08.07.2020**
(21) Application number: 17923671.6
(22) Date of filing: 29.08.2017
(51) Int. Cl.: H04W 56/00, H04W 16/32, H04W 52/02

(54) **USER EQUIPMENT, BASE STATION AND WIRELESS COMMUNICATION METHOD**

(71) Applicant: NTT DOCOMO, INC., Chiyoda-ku Tokyo 100-6150 (JP)
(72) Inventor: MOROGA, Hideyuki, Tokyo 100-6150 (JP); TAKEDA, Kazuaki, Tokyo 100-6150 (JP); NAGATA, Satoshi, Tokyo 100-6150 (JP)
(74) Representative: Hoffmann Eitle
(86) International application number: PCT/JP2017/031005
(87) International publication number: WO 2019/043799

(57) **Abstract**

In a second radio communication area (200) formed by a second base station (30) in a first radio communication area (100) of a first base station (10), a user terminal (20) receives, from the first base station (10), information on a timing of a synchronization signal transmitted from the second base station (30). The user terminal (20) controls a timing for trying to detect the synchronization signal transmitted from the second base station (30) based on the information on the timing received from the first base station (10).

## Description

### Technical Field

The present invention relates to a user terminal, a base station, and a radio communication method.

### Background Art

Long Term Evolution (LTE) has been specified for achieving a higher data rate, lower latency, and the like in a Universal Mobile Telecommunications System (UMTS) network (see Non-Patent Literature (hereinafter referred to as "NPL") 1). Successor systems of LTE have also been studied for achieving a broader bandwidth and a higher speed based on LTE. Examples of successor systems of LTE include the systems called LTE-Advanced (LTE-A), Future Radio Access (FRA), 5th generation mobile communication system (5G), 5G plus (5G+), New Radio Access Technology (New-RAT)), and the like.

In the specification of LTE, Orthogonal Frequency Division Multiplexing (OFDM) has been adopted as a downlink communication scheme. In the case of OFDM, areas of a physical control channel (e.g., Physical Downlink Control Channel (PDCCH)) including a control signal and a physical data channel (e.g., Physical Downlink Shared Channel (PDSCH)) are defined for each symbol in a resource block including 14 symbols (see NPLs 2 and 3).

For the next generation mobile communication system (e.g., 5G), it has been studied to perform beam forming (BF) using a technique of massive Multiple Input Multiple Output (MIMO) in which multiple antenna elements (e.g., 100 elements or more) are used in a high frequency band (e.g., 5 GHz or more) for achieving a higher speed and less interference of the signal transmission.

In the next generation mobile communication system, a smaller Peak to Average Power Ratio (PAPR) is desired. Therefore, in 5G, a single carrier transmission scheme with a small PAPR may be adopted as a downlink communication scheme. In the case of the single carrier transmission scheme, signals are mapped in a time domain, whereby it is unnecessary to define the physical control channel and the physical data channel for each symbol.

Further, for the next generation mobile communication system, it has been studied to dispose a small cell with coverage smaller than that of a macro cell to correspond to a hot spot locally occurred in the macro cell.

### Citation List

### Non-Patent Literature

NPL 1
   3GPP TS 36.300 v14.3.0, "Evolved Universal Terrestrial Radio Access (E-UTRA) and Evolved Universal Terrestrial Radio Access Network (E-UTRAN); Overall description; Stage 2 (Release 14)," June 2017
NPL 2
   3GPP TS 36.211 v14.2.0, "Evolved Universal Terrestrial Radio Access (E-UTRA); Physical channels and modulation (Release 14)," March 2017
NPL 3
   3GPP TS 36.213 v14.2.0, "Evolved Universal Terrestrial Radio Access (E-UTRA); Physical layer procedures (Release 14)," March 2017

### Summary of Invention

### Technical Problem

There is a possibility that a user terminal is not located in the small cell covering the hot spot. Caring of a synchronization signal (SS) in consideration of cells in which no user terminal may exist has not been studied. The synchronization signal is periodically transmitted from the radio base station (hereinafter also simply referred to as a "base station") forming the cell that can be accessed by a user terminal, the cell being detected by the user terminal (which is also referred to as a "cell search") to establish synchronization of communication in the cell.

It is an object of one aspect of the present invention is to suppress an increase in power consumption of a user terminal which unnecessarily tries to detect a synchronization signal transmitted from the base station.

### Solution to Problem

A user terminal according to one aspect of the present invention includes: a reception section that receives, in a second radio communication area formed by a second base station located in a first radio communication area of a first base station, information on a timing of a synchronization signal transmitted from the second base station from the first base station; and a control section that controls a timing for trying to detect the synchronization signalbased on the information on the timing.

### Advantageous Effects of Invention

According to one aspect of the present invention, it is available to suppress that a user terminal unnecessarily tries to detect a synchronization signal transmitted from a base station, and therefore, an increase in power consumption of the user terminal can be suppressed.

### Brief Description of Drawings

FIG. 1 is a schematic diagram illustrating an exemplary configuration of a wire communication system according to an embodiment;
FIG. 2 is a block diagram illustrating an exemplary detail configuration of a radio base station according to an embodiment;
FIG. 3 is a block diagram illustrating an exemplary detail configuration of a user terminal according to an embodiment;
FIG. 4 is a diagram schematically illustrating exemplary transmission of a synchronization signal (SS) according to an embodiment;
FIG. 5 is a schematic diagram for illustrating scenario A according to an embodiment;
FIG. 6 is a schematic diagram for illustrating scenario B according to an embodiment;
FIG. 7 is a sequence diagram illustrating exemplary operation of scenario A according to an embodiment;
FIG. 8 is a schematic diagram for illustrating a concept of a cluster of small cells according to an embodiment;
FIG. 9 is a diagram schematically illustrating an aspect of notifying a user terminal of timing information of an SS according to an embodiment;
FIG. 10 is a diagram schematically illustrating exemplary processing of detecting an SS performed by a user terminal according to an embodiment;
FIG. 11 is a sequence diagram illustrating exemplary operation of scenario B according to an embodiment;
FIG. 12 is a diagram for illustrating supplementary matters (exemplary processing of detecting an SS performed by a user terminal) common to scenarios A and B according to an embodiment;
FIGS. 13A and 13B are diagrams for illustrating supplementary matters (exemplary arrangement relationship between SS and PDCCH) common to scenarios A and B according to an embodiment; and
FIG. 14 is a diagram illustrating an exemplary hardware configuration of a radio base station and a user terminal according to an embodiment.

### Description of Embodiments

Hereinafter, an embodiment of the present invention will be described in detail with reference to the accompanying drawings.

### (Exemplary Network Configuration)

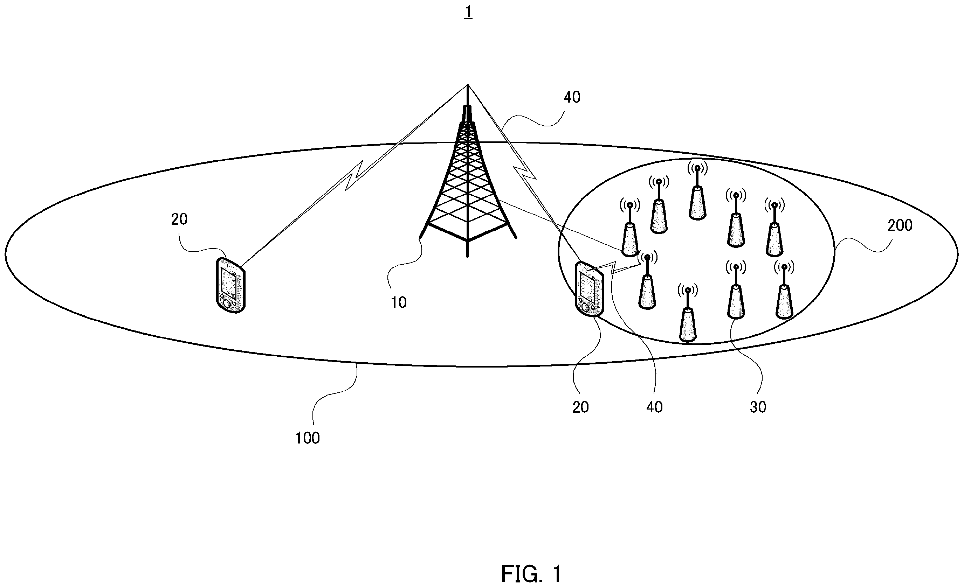

FIG. 1 is a schematic diagram illustrating an exemplary configuration of a radio communication system according to an embodiment. Radio communication system 1 illustrated in FIG. 1 may exemplarily include radio base station 10, and user terminal 20. Base station 10 may be exemplarily connected to a core network (not illustrated). Two or more base stations 10 may exist in radio communication system 1. Two or more user terminals 20 may also exist in radio communication system 1.

Radio base station (that may be simply referred to as "base station" hereinafter) 10 exemplarily forms or provides radio communication area 100. The "radio communication area" may be referred to as a "cell", "cell area", "sector", "sector area", "coverage area", "cover area", "radio area", "communication area", "service area", "cluster area", or the like.

As illustrated in FIG. 1, one or more base stations 30 may be provided in radio communication area 100. Radio communication area 200 may be formed or provided by one or more base stations 30. In other words, radio communication area 200 may be formed by one base station 30, or may be formed by two or more base stations 30.

Base station 30 may be exemplarily positioned in an area referred to as a "hot spot". The "hot spot" may be, for example, an area in which density of user terminals is higher than other areas and a traffic volume is relatively high. With providing one or more base stations 30 in a hot spot, for example, traffic offload (that may be also referred to as "data offload") can be achieved.

Although radio communication area 200 is included in radio communication area 100 in the example of FIG. 1, there may be a partial area of radio communication area 200 not included in radio communication area 100 depending on the arrangement of base stations 30.

A communication point provided by a radio communication function separated from a base station main body, which is referred to as remote radio equipment (RRE), remote radio head (RRH), or the like, may correspond to any of base stations 30. Further, a relay node that relays communication may correspond to any of base stations 30.

Base station 10 is an example of a "first base station", and radio communication area 100 is an example of a "first radio communication area". Base station 30 is an example of a "second base station", and radio communication area 200 is an example of a "second radio communication area".

User terminal 20 is available to communicate with first base station 10 in radio communication area 100, and is also available to communicate with second base station 30 in radio communication area 200. Further, user terminal 20 positioned in the area where radio communication areas 100 and 200 overlap with each other is available to connect to and communicate with both of first base station 10 and second base station 30 (see reference sign 40 in FIG. 1). In this manner, an aspect in which user terminal 20 accesses and communicates with two different cells may be referred to as dual connectivity (DC) in some cases.

Base station 10 (that may be read as "base station 30" as appropriate) transmits a signal to user terminal 20 using a downlink (DL) physical channel. The signal transmitted using the downlink physical channel may include a synchronization signal (SS). Base station 10 transmits a DL control signal including, for example, downlink control information (DCI) using a downlink (DL) physical control channel (e.g., Physical Downlink Control Channel (PDCCH)), and transmits a DL data signal and a Demodulation Reference Signal (DMRS) for demodulating the DL data signal using a DL physical data channel (e.g., Physical Downlink Shared Channel (PDSCH)). Further, user terminal 20 transmits, to radio base station 10, an uplink (UL) control signal including, for example, Uplink Control Information (UCI) using a UL physical control channel (e.g., Physical Uplink Control Channel (PUCCH)) or a UL physical data channel (e.g., Physical Uplink Shared Channel (PUSCH)), and transmits a UL data signal and a DMRS using the UL physical data channel (e.g., Physical Uplink Shared Channel (PUSCH)).

The DL channel and the UL channel transmitted and received by radio base station 10 and user terminal 20 are not limited to the PDCCH, PDSCH, PUCCH, PUSCH, and the like described above, and may be other channels such as a Physical Broadcast Channel (PBCH) and a Random Access Channel (RACH).

A single carrier transmission scheme may be applied to the DL communication between radio base station 10 and user terminal 20, or a multicarrier transmission scheme may be applied. Non-limiting examples of the single carrier transmission scheme include DFT-S-OFDM. The "DFT-S-OFDM" is an abbreviation for Discrete Fourier Transform (DFT)-Spread-Orthogonal Frequency Division Multiplexing (OFDM).

### <Radio Base Station>

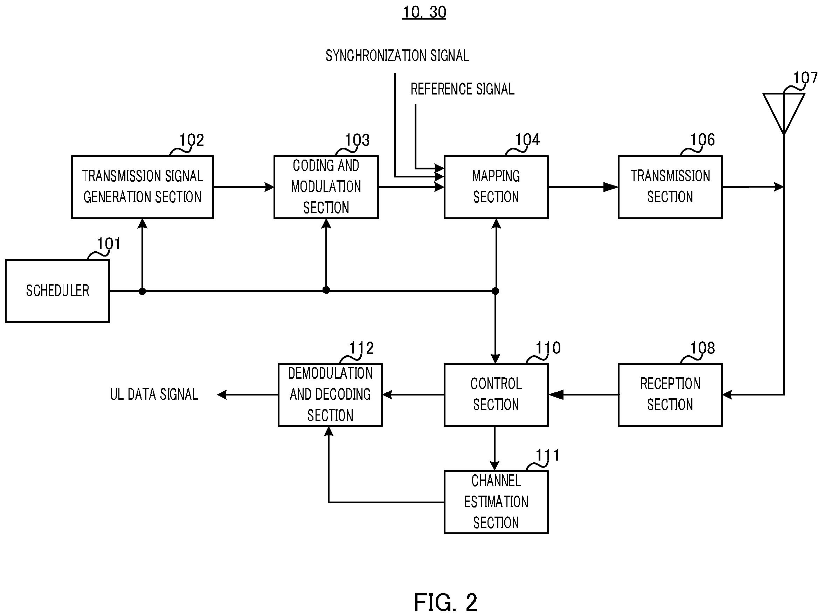

FIG. 2 is a block diagram illustrating an exemplary detail configuration of radio base station 10 according to the present embodiment. Radio base station 10 illustrated in FIG. 2 includes scheduler 101, transmission signal generation section 102, coding and modulation section 103, mapping section 104, transmission section 106, antenna 107, reception section 108, control section 110, channel estimation section 111, and demodulation and decoding section 112. An exemplary configuration of radio base station 30 may be similar to that of radio base station 10. When radio base station 30 is RRH, functions of transmission section 106 and reception section 108 exemplified in FIG. 2 may be included in the RRH

Scheduler 101 performs scheduling (e.g., resource allocation) of DL signals (e.g., DL data signal, DL control signal, DMRS, etc.). Further, scheduler 101 performs scheduling (e.g., resource allocation) of UL signals (e.g., UL data signal, UL control signal, DMRS, etc.).

In the scheduling, scheduler 101 sets a transmission section of the DL physical control channel and a transmission duration of the DL physical data channel for each block. Then, scheduler 101 performs scheduling of the DL signal in each transmission duration.

Scheduler 101 may set a reception section of the UL physical control channel and a reception section of the UL physical data channel for each block. In that case, scheduler 101 performs scheduling of the UL signal in each set reception duration.

Scheduler 101 outputs scheduling information including resource allocation information to transmission signal generation section 102 and mapping section 104.

Further, scheduler 101 sets a Modulation and Coding Scheme (MCS) (coding rate, modulation scheme, etc.) of the DL data signal and the UL data signal based on, for example, the channel quality between radio base station 10 and user terminal 20, and outputs the MCS information to transmission signal generation section 102 and coding and modulation section 103. The MCS is not limited to being set by radio base station 10, and may be set by user terminal 20. In the case where user terminal 20 sets the MCS, radio base station 10 may receive the MCS information from user terminal 20 (not illustrated).

Transmission signal generation section 102 generates a DL signal including the DL data signal and the DL control signal. For example, the DL control signal includes Downlink Control Information (DCI) including the scheduling information (e.g., resource allocation information of the DL data signal) or the MCS information output from scheduler 101. Transmission signal generation section 102 outputs the generated transmission signal to coding and modulation section 103.

Coding and modulation section 103 performs coding processing and modulation processing on the transmission signal input from transmission signal generation section 102 based on the MCS information input from scheduler 101, for example. Coding and modulation section 103 outputs the modulated transmission signal to mapping section 104.

Mapping section 104 maps the transmission signal input from coding and modulation section 103 to a predetermined radio resource based on the scheduling information (e.g., DL resource allocation) input from scheduler 101. Further, mapping section 104 maps the synchronization signal (SS) and/or the reference signal (e.g., DMRS) to a predetermined radio resource based on the scheduling information. Mapping section 104 outputs the DL signal mapped to the radio resource to transmission section 106.

Transmission section 106 performs, on the DL signal input from mapping section 104, transmission processing such as up-conversion and amplification, and transmits a radio frequency signal (DL signal) from antenna 107.

Reception section 108 performs, on the radio frequency signal (UL signal) received by antenna 107, reception processing such as amplification and down-conversion, and outputs the UL signal to control section 110.

Control section 110 separates (or demaps) the UL data signal and the DMRS from the UL signal input from reception section 108 based on the scheduling information (UL resource allocation) input from scheduler 101. Then, control section 110 outputs the UL data signal to demodulation and decoding section 112, and outputs the DMRS to channel estimation section 111.

Channel estimation section 111 performs channel estimation using the DMRS of the UL signal, and outputs a channel estimation value, which is an estimation result, to demodulation and decoding section 112.

Demodulation and decoding section 112 performs demodulation and decoding processing on the UL data signal input from control section 110 based on the channel estimation value input from channel estimation section 111. Further, demodulation and decoding section 112 transfers the demodulated UL data signal to an application section (not illustrated). The application section performs, for example, processing related to a physical layer or higher-layers higher than the MAC layer.

### <User Terminal>

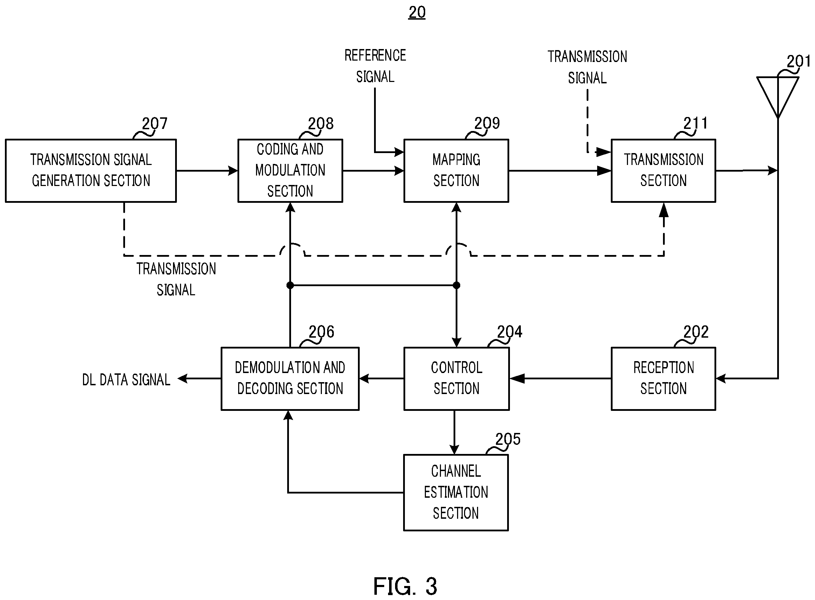

FIG. 3 is a block diagram illustrating an exemplary detail configuration of user terminal 20 according to the present embodiment. User terminal 20 illustrated in FIG. 3 includes antenna 201, reception section 202, control section 204, channel estimation section 205, demodulation and decoding section 206, transmission signal generation section 207, coding and modulation section 208, mapping section 209, and transmission section 211.

Reception section 202 performs, on the radio frequency signal (DL signal) received by antenna 201, reception processing such as amplification and down-conversion, and outputs the DL signal to control section 204. The DL signal includes at least a DL data signal, a DL control signal, and a DMRS.

Control section 204 separates (or demaps) the DL control signal and the DMRS from the DL signal input from reception section 202. Then, control section 204 outputs the DL control signal to demodulation and decoding section 206, and outputs the DMRS to channel estimation section 205.

Further, control section 204 separates (or demaps) the DL data signal from the DL signal based on the scheduling information (e.g., DL resource allocation information) input from demodulation and decoding section 206, and outputs the DL data signal to demodulation and decoding section 206.

Channel estimation section 205 performs channel estimation using the separated DMRS, and outputs a channel estimation value, which is an estimation result, to demodulation and decoding section 206.

Demodulation and decoding section 206 demodulates the DL control signal input from control section 204. Further, demodulation and decoding section 206 performs decoding processing (e.g., blind detection processing) on the demodulated DL control signal. Demodulation and decoding section 206 outputs, to control section 204 and mapping section 209, the scheduling information (DL/UL resource allocation) addressed to the relevant user terminal 20 obtained by the DL control signal being decoded, and outputs MCS information for the UL data signal to coding and modulation section 208.

Further, demodulation and decoding section 206 performs, on the DL data signal input from control section 204, demodulation and decoding processing using the channel estimation value input from channel estimation section 205 based on MCS information for the DL data signal included in the DL control signal input from control section 204. Furthermore, demodulation and decoding section 206 transfers the demodulated DL data signal to an application section (not illustrated). The application section performs, for example, processing related to a physical layer or layers of an order higher than that of the MAC layer.

Transmission signal generation section 207 generates a transmission signal (including UL data signal or UL control signal), and outputs the generated transmission signal to coding and modulation section 208.

Coding and modulation section 208 performs coding processing and modulation processing on the transmission signal input from transmission signal generation section 207 based on the MCS information input from demodulation and decoding section 206, for example. Coding and modulation section 208 outputs the modulated transmission signal to mapping section 209.

Mapping section 209 maps the transmission signal input from coding and modulation section 208 to a predetermined radio resource based on the scheduling information (UL resource allocation) input from demodulation and decoding section 206. Further, mapping section 209 maps the reference signal (e.g., DMRS) to a predetermined radio resource based on the scheduling information.

Mapping section 209 outputs the UL signal mapped to the radio resource to transmission section 211.

Transmission section 211 performs transmission processing such as up-conversion and amplification on the UL signal (including at least the UL data signal and the DMRS) input from mapping section 209, and transmits a radio frequency signal (UL signal) from antenna 201.

A notification signal (hereinafter referred to as "originating signal") for notifying radio devices positioned in surrounding areas (e.g., base station 30) of the presence of user terminal 20 may be transmitted from transmission section 211. The originating signal transmitted from transmission section 211 may be exemplarily generated and input by transmission signal generation section 207, or may be generated and input to transmission section 211 by a block different from transmission signal generation section 207 in user terminal 20, as indicated by dotted lines in FIG. 3. The originating signal may be referred to as a "beacon signal".

### <Transmission of Synchronization Signal (SS)>

In the configuration exemplified in FIG. 1, different bands may be allocated to radio communication areas 100 and 200 as available frequency bands. As a non-limiting example, a frequency band higher than that of radio communication area 100 may be allocated to radio communication area 200 covering the hot spot. For example, a 2 GHz band may be allocated to radio communication area 100, and a 70 GHz band may be allocated to radio communication area 200.

In 5G, in order to reduce phase noise and to achieve low Peak-to-Average Power Ratio (PAPR) in using a high frequency band such as 70 GHz, it has been studied to apply a single carrier scheme to a DL signal waveform.

Hereinafter, radio communication area 100 with a low frequency band (e.g., 2 GHz band) may be referred as "macro cell 100", and radio communication area 200 with a high frequency band (e.g., 70 GHz band) may be referred to as "small cell 200" for convenience.

In addition, base station 10 forming macro cell 100 may be referred to as "macro base station 10" or "low frequency band base station 10", and each base station 30 forming small cell 200 may be referred to as "small base station 30" or "high frequency band base station 30" for convenience. User terminal 20 also may be referred to as "UE 20" for convenience.

In the single carrier scheme, signals are mapped in a time domain rather than mapping signals for each subcarrier in a frequency domain such as in OFDM, whereby processing such as performing FFT in a specific section is not required. Therefore, the PDCCH, PDSCH, RS, and the like can be flexibly configured in the time domain. Such a scheme may be referred to as a flexible single carrier configuration. In the flexible single carrier configuration, a synchronization signal (SS) used for synchronization with the network can also be flexibly configured.

In this manner, the aspect of deployment of the network varies for each frequency band, and it is assumed that small cell 200 of a high frequency band is locally formed in the hot spot, for example. However, since the area of the hot spot is limited geographically and/or temporally, no UE 20 may be positioned in the area.

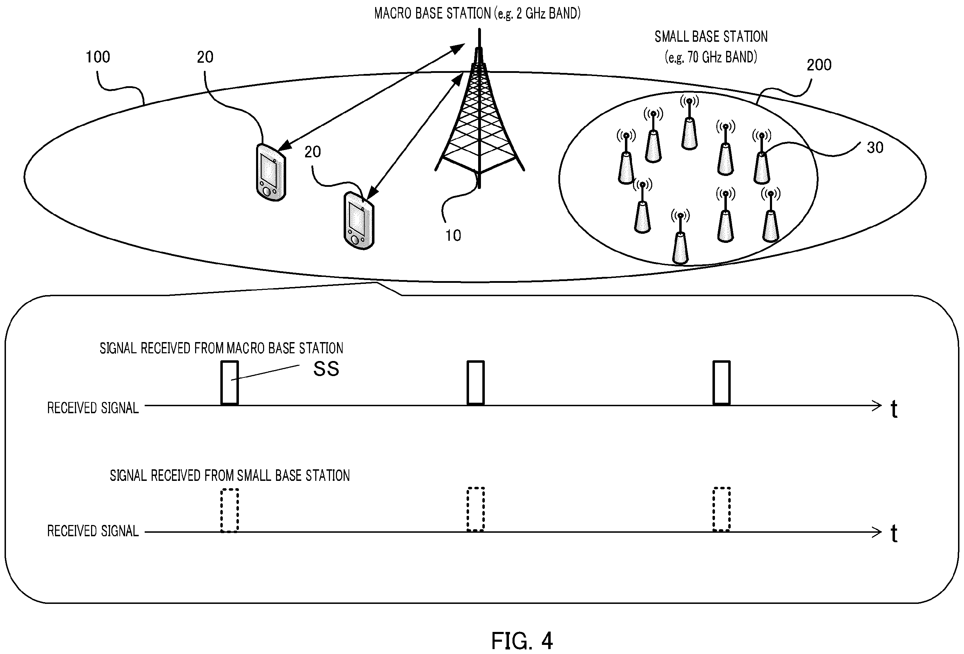

Even in such a case, as schematically exemplified in FIG. 4, the power consumption of small base station 30 may increase if small base station 30 continues to periodically transmit the synchronization signal (SS) in a similar manner to macro base station 10, for example. Focusing on UE 20, when UE 20 continues to periodically try to perform processing for detecting the SS, for example, the power consumption of UE 20 may increase.

Therefore, in the present embodiment, SS transmission performed by small base station 30 is controlled depending on whether UE 20 is positioned in small cell 200. Further, the opportunity to try to SS detection by UE 20 is controlled depending on whether UE 20 is positioned in small cell 200.

By such control, unnecessary SS transmission performed by small base station 30 can be suppressed, and unnecessary SS detection processing performed by UE 20 can be suppressed. Therefore, an increase in power consumption of small base station 30 can be suppressed, and an increase in power consumption of UE 20 can also be suppressed.

Since radio waves in a high frequency band such as 70 GHz have directivity higher than that of radio waves in a low frequency band such as 2 GHz, it may require a large number of high frequency band base stations 30 to cover the hot spot in some cases. Therefore, it is useful to be capable of suppressing the increase in power consumption of high frequency band base station 30 as described above.

### <Method of Suppressing Power Consumption>

Here, two scenarios A and B can be considered exemplarily as a scenario capable of suppressing the increase in power consumption described above.

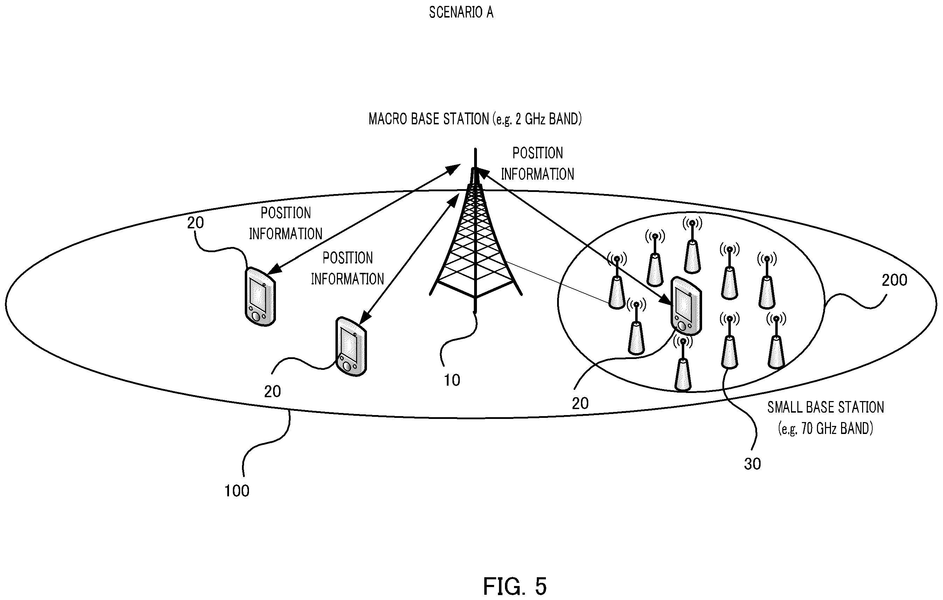

Scenario A is a case where macro base station 10 knows the positions of small base station 30 and UE 20, as schematically exemplified in FIG. 5.

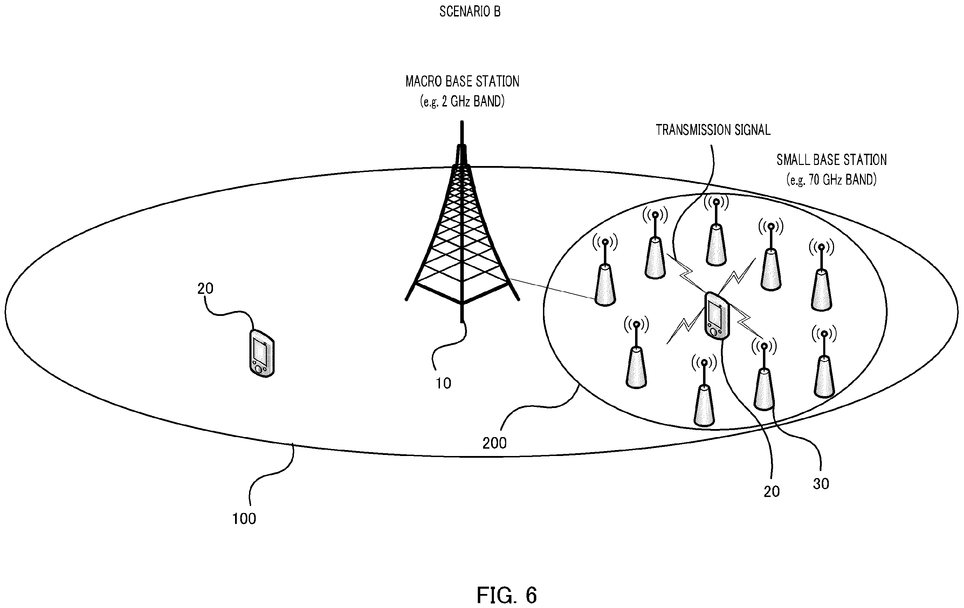

Scenario B is a case where, although macro base station 10 does not know the positions of small base station 30 and UE 20 as in scenario A, UE 20 transmits an originating signal to notify others around UE 20 of the presence of UE 20, as schematically exemplified in FIG. 6. The originating signal may be transmitted in a frequency band that can be received by small base station 30 (exemplarily, 70 GHz band), or may be transmitted in a frequency band for transmitting the originating signal.

Hereinafter, scenario A and scenario B will be described separately.

### <Scenario A>

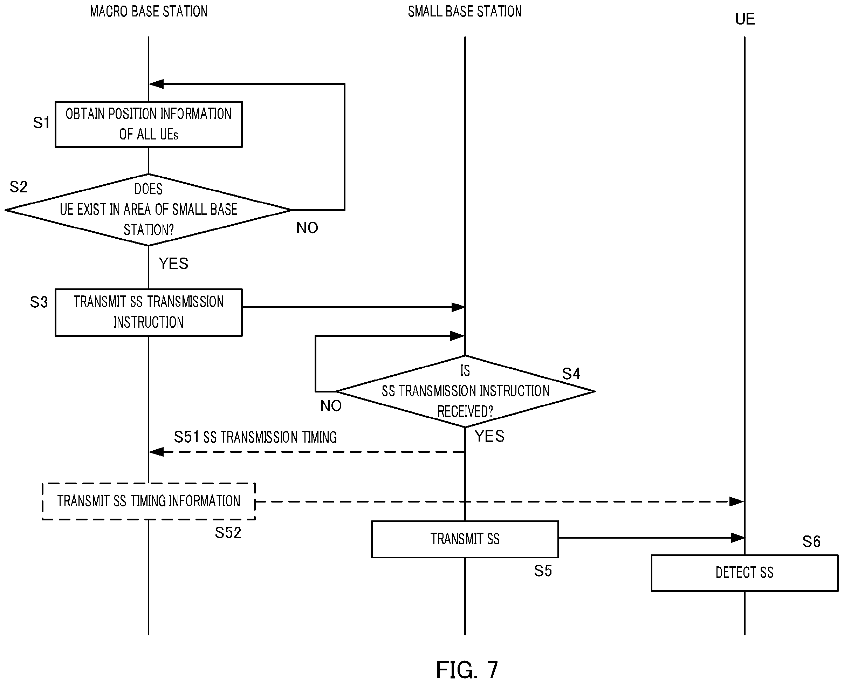

First, scenario A (see FIG. 5) will be described with reference to the sequence diagram in FIG. 7.

In scenario A, macro base station 10 obtains and manages, for example, position information of UE 20 and small base station 30 located in macro cell 100 (S1 in FIG. 7).

There is no particular limitation on the method of obtaining the location information. For example, the position information of UE 20 may be obtained using a Global Positioning System (GPS), or the position information of one or more small base stations 30 receiving the transmission radio waves from UE 20 may be used as the simplified position information of UE 20. The position information is not limited to information such as latitude and longitude, and may include, for example, information for specifying a serving cell or information for specifying a tracking area. Further, the distance between macro base station 10 and UE 20 may be estimated based on deviation in signal transmission/reception timing between UE 20 and macro base station 10 or information on the timing advance (TA) being performed by UE 20 so that the position information of UE 20 is obtained by macro base station 10.

The position information of small base station 30 may be exemplarily obtained by communication using a wired interface or a radio interface between macro base station 10 and small base station 30, or may be set in macro base station 10 in advance. The service area of small base station 30 may be specified based on the position information of small base station 30.

In a case where small base station 30 is RRH, a standardized interface such as CPRI and OBSAI may be applied to the wired interface. The "CPRI" is an abbreviation for "common public radio interface", and the "OBSAI" is an abbreviation for "open base station architecture initiative".

When small base station 30 is an independent base station other than the RRH, an X2 interface, which is an example of the interface between base stations, may be applied to the wired interface.

Macro base station 10 can detect that, based on the obtained position information, UE 20 has entered the service area of any small base station 30, and that UE 20 has departed or leaved away from the service area of any small base station 30.

For example, macro base station 10 may store information on a range of the service area (that may be hereinafter referred to as "area information" for convenience) formed by small base station 30 to compare the position information of UE 20 with the area information. Through this comparison, macro base station 10 is available to determine whether the position of UE 20 determined by the position information is included in the service area formed by small base station 30. Such determination may be referred to as "area determination" for convenience.

When macro base station 10 detects that UE 20 is positioned in the service area of any one of small base stations 30 (YES in S2 in FIG. 7), macro base station 10 instructs small base station 30 to transmit the SS (S3 in FIG. 7).

The processing related to the area detection and the UE detection described above may be exemplarily executed in scheduler 101 of macro base station 10. In other words, scheduler 101 of macro base station 10 may function as an example of a detection section for detecting that UE 20 is positioned in the service area of small base station 30 arranged for macro cell 100. Further, the SS transmission instruction may be exemplarily generated in scheduler 101 of macro base station 10, and may be transmitted to small base station 30 through the X2 interface, for example.

A destination of the SS transmission instruction may be limited to small base station 30 in the service area in which UE 20 has entered, or may be one or more small base stations 30 in the vicinity including small base station 30. In other words, the SS may be transmitted limitedly to small base station 30 in the service area in which UE 20 has entered, or may be transmitted from one or more small base stations 30 in the vicinity including that small base station 30.

Macro base station 10 may obtain, while not detecting the entry of UE 20 in the service area of any one of small base stations 30 (NO in S2 in FIG. 7), the position information of UE 20 again to update the information to the latest information.

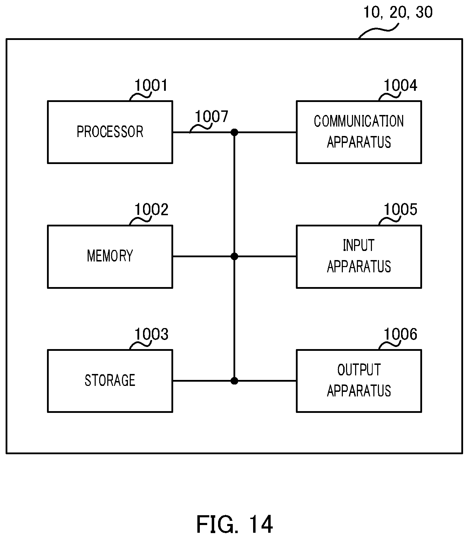

The area information (in other words, service area of small base station 30) may be designed based on the position of small base station 30 such as within the radius of 100 m from base station 30, for example. However, the method of designing and generating the area information is not limited thereto. The area information may be configured as a two-dimensional or three-dimensional area map, and may be stored in macro base station 10. The area information may be stored in memory 1002 and/or storage 1003 to be described later with reference to FIG. 14, for example.

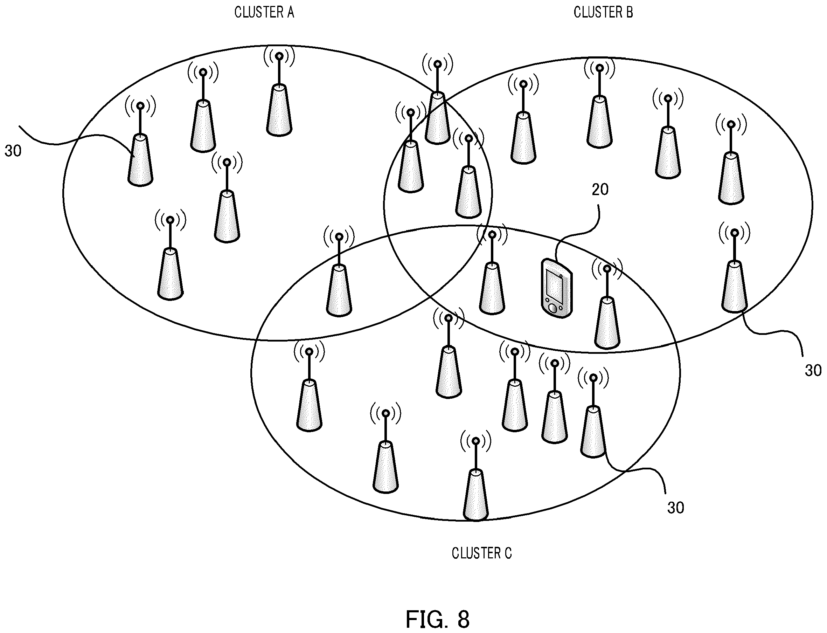

Further, macro base station 10 may deal and process a cluster in which service areas of a plurality of small base stations 30 are grouped as one service area. As schematically exemplified in FIG. 8, a plurality of clusters (clusters A to C in the example of FIG. 8) may be set in macro cell 100. All of or a part of the plurality of clusters may partially overlap with other clusters.

In the example of FIG. 8, when UE 20 is positioned in the overlapping area between cluster B and cluster C, clusters B and C may be set as the area for transmitting the SS. For example, macro base station 10 may provide an instruction for SS transmission to one or more small base stations 30 belonging to cluster B and one or more small base stations 30 belonging to cluster C.

Meanwhile, cluster A in which no UE 20 exists may be set as an area unnecessary to transmit the SS. For example, in FIG. 8, macro base station 10 may be unnecessary to provide an instruction for SS transmission to one or more small base stations 30 belonging to the area satisfying the conditions "cluster A", "not cluster B", and "not cluster C". Alternatively, an instruction for disabling the SS transmission may be provided to small base station 30.

Upon reception of the instruction for SS transmission from macro base station 10 (YES in S4 in FIG. 7), small base station 30 transmits the SS (S5 in FIG. 7). While not receiving the instruction for SS transmission from macro base station 10 (NO in S4 in FIG. 7), small base station 30 may monitor and wait for reception of the instruction for SS transmission. The processing for monitoring reception of the instruction for SS transmission (S4) may be exemplarily performed in scheduler 101 (see FIG. 2) of small base station 30.

According to processing of S4 and S5 described above, UE 20 receives and detects the SS in a limited case where UE 20 enters the service area of any one of small base stations 30 (S6 in FIG. 7). The processing of detecting the SS in UE 20 may be exemplarily performed by control section 204 (see FIG. 3) of UE 20.

Therefore, UE 20 is not required to attempt to perform the processing of detecting the SS when UE20 is not positioned in the service area of small base station 30. An increase in power consumption of UE 20 can be suppressed accordingly. For small base station 30, when UE 20 does not exist in the service area of small base station 30, it is not required to transmit the SS (in other words, it can be stopped), whereby an increase in power consumption of small base station 30 can be suppressed.

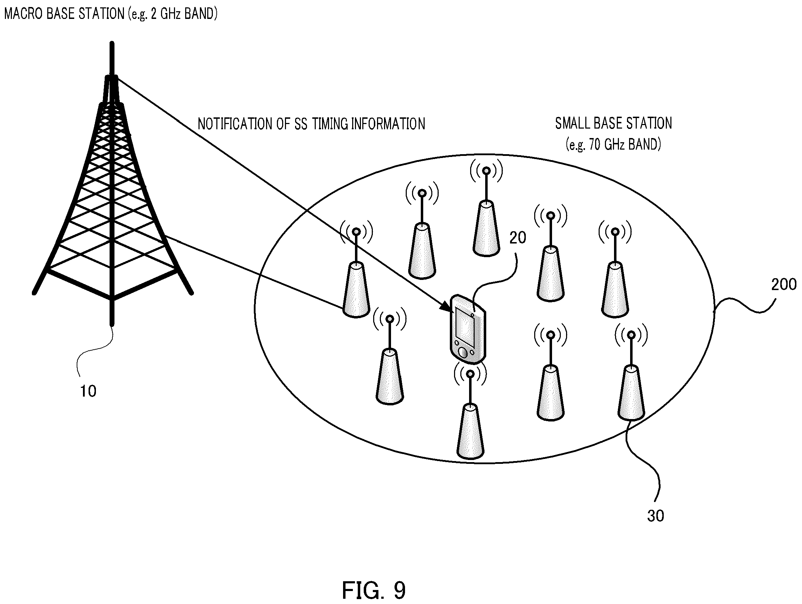

As exemplified by a dotted line in FIG. 7, macro base station 10 instructs small base station 30 to transmit the SS, and then transmits, to UE 20, information on the timing of the SS transmitted from small base station 30 (that may be referred to as "SS timing information" for convenience) to notify UE 20 (S52 in FIG. 7, and FIG. 9). The SS timing information may be transmitted before instructing small base station 30 to transmit the SS, or may be transmitted together with the instruction for SS transmission directed to small base station 30. The SS timing information may be exemplarily generated in scheduler 101 of macro base station 10, and may be transmitted from transmission section 106.

As a non-limiting example, macro base station 10 may transmit the SS timing information to UE 20 in a control plane (C-plane) that has been connected to UE 20 in macro cell 100. For transmission of the SS timing information, either higher layer signaling such as Medium Access Control (MAC) signaling and Radio Resource Control (RRC) or physical layer signaling (e.g., using DCI of PDCCH) may be exemplarily applied.

The SS transmission timing indicated in the SS timing information may be determined by macro base station 10, or may be determined by small base station 30.

For example, the SS transmission timing determined by macro base station 10 may be indicated in the SS timing information addressed to UE 20, as a setting for SS transmission performed by small base station 30 according to the SS transmission timing determined by macro base station 10.

In other words, the SS timing information may be generated based on the instruction for SS transmission from macro base station 10 to small base station 30. The SS timing information is generated basedon the instruction for SS transmission from macro base station 10 to small base station 30, whereby delay in transmission of the SS timing information to UE 20 can be minimized.

Alternatively, macro base station 10 may receive information on the SS transmission timing determined by small base station 30 from small base station 30 (S51 in FIG. 7), and the information may be indicated in the SS timing information transmitted by macro base station 10 to UE 20.

Further, the SS timing information is not limited to information indicating one time point, and may be information indicating a specific time width (in other words, time range). The SS timing information may exemplarily be information indicating a time range (that may be referred to as "detection range") in which UE 20 tries to perform SS detection processing.

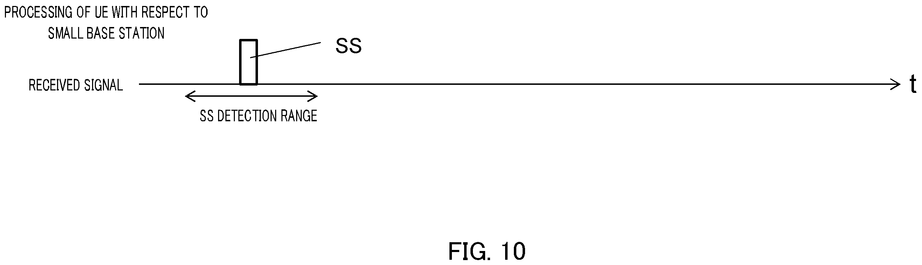

For example, as schematically illustrated in FIG. 10, UE 20 may try to perform processing for detecting the SS transmitted by small base station 30 in the detection range indicated by the SS timing information. In other words, UE 20 may control the timing for trying to perform the SS detection processing based on the SS timing information. Therefore, the effect of suppressing the power consumption of UE 20 can be further enhanced.

On/off control of the SS transmission by small base station 30 may be performed based on a reception quality indicator with respect to UE 20, such as Reference Signal Received Power (RSRP) and Reference Signal Received Quality (RSRQ).

Since the RSRP and the RSRQ are information obtained after UE 20 detects the SS reception and establishes the communication synchronization with small base station 30 originally, it is preferable that the SS is transmitted from small base station 30 at least once.

Meanwhile, in the embodiment described above, on/off control of the SS transmission by small base station 30 is performed according to a position of UE 20 without requiring the reception quality indicator with respect to UE 20, whereby the SS transmission in the service area in which no UE 20 exists can be reliably suppressed.

### <Scenario B>

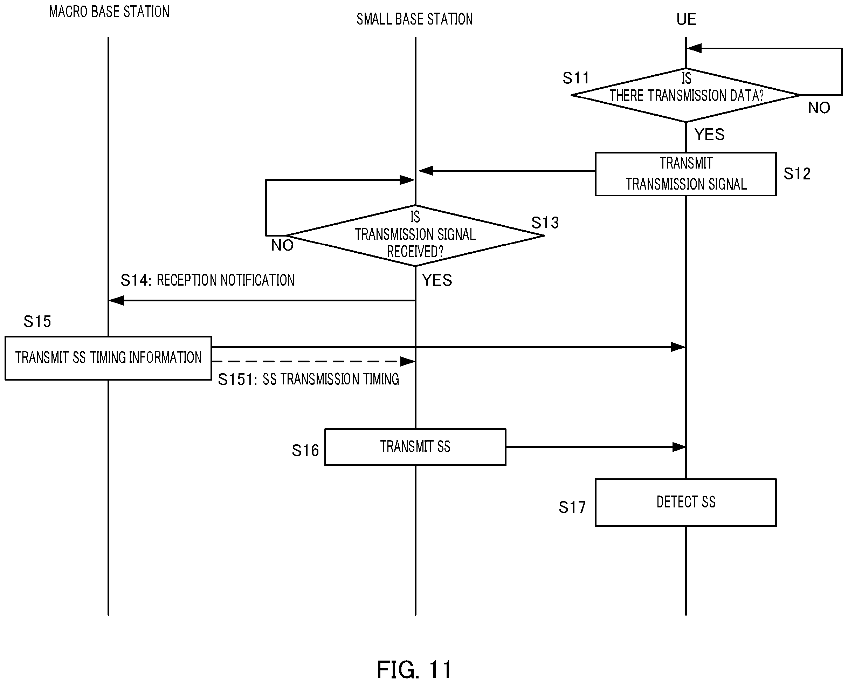

Next, scenario B (see FIG. 6) will be described with reference to the sequence diagram in FIG. 11.

In scenario B, as schematically exemplified in FIG. 6, UE 20 transmits an originating signal. The originating signal is exemplarily generated and transmitted when UE 20 holds uplink transmission data (YES in S11, and S12 in FIG. 11).

By setting the originating signal to be transmitted in a limited case where UE 20 holds the uplink transmission data, an increase in power consumption of UE 20 can be minimized. In UE 20, the originating signal may be exemplarily generated in transmission signal generation section 207 (see FIG. 3) of UE 20, and may be transmitted from transmission section 211.

Small base station 30 monitors whether the originating signal is received (NO in S13 in FIG. 11). When the originating signal is received (YES in S13 in FIG. 11), small base station 30 transmits the SS (S16 in FIG. 11).

The processing for monitoring reception of the originating signal (S13) may be exemplarily performed in scheduler 101 (see FIG. 2) of small base station 30. Further, the SS transmission processing indicated in S16 in FIG. 11 may be exemplarily performed through mapping section 104 and transmission section 106 of small base station 30 according to the control performed by scheduler 101 of small base station 30.

Small base station 30 may notify macro base station 10 of the reception of the originating signal through, for example, the X2 interface (S14 in FIG. 11) at any timing after the reception of the originating signal and before the SS transmission. This notification may be referred to as "reception notification" for convenience.

By this notification, it can be regarded that the fact that UE 20 is positioned in the service area of small base station 30 is (indirectly or implicitly) detected in macro base station 10. In other words, macro base station 10 may determine that UE 20 is positioned in the service area of small base station 30 with the notification from the small base station that has received the transmission signal.

Upon reception of the reception notification from any one of small base stations 30, macro base station 10 may transmit the timing information of the SS transmitted by small base station 30 to UE 20 (S15 in FIG. 11). The transmission of the SS timing information may be performed through transmission signal generation section 102 of macro base station 10 under the control of scheduler 101 of macro base station 10, for example.

For example, in a similar manner to scenario A, macro base station 10 may transmit the SS timing information to UE 20 in the C-plane that has been connected to UE 20 in macro cell 100. In scenario B as well, either higher layer signaling such as MAC signaling and RRC or physical layer signaling (e.g., using DCI of PDCCH) may be applied to the transmission of the SS timing information.

In a similar manner to scenario A described above, the SS transmission timing indicated in the SS timing information may be determined by macro base station 10, or may be determined by small base station 30. In any case, as described below, the SS timing information transmitted from macro base station 10 to UE 20 may be generated based on the notification from small base station 30 that has received the originating signal to macro base station 10.

When macro base station 10 determines the SS transmission timing, information on the determined SS transmission timing may be transmitted to corresponding small base station 30 through, for example, the X2 interface (S151 in FIG. 11).

In that case, small base station 30 transmits the SS in accordance with the SS timing information received from macro base station 10 after reception of the originating signal (S13), in other words, in accordance with the SS transmission timing determined by macro base station 10.

On the other hand, when small base station 30 determines the SS transmission timing, small base station 30 may notify macro base station 10 of the information on the determined SS transmission timing before the SS transmission is started (S16). The notification may be performed as an alternative to the reception notification (S14) to macro base station 10.

As described above, in S15 in FIG. 11, macro base station 10 can notify UE 20 of the SS timing information determined and transmitted by small base station 30.

UE 20 may monitor whether the SS timing information is received from macro base station 10 after the originating signal is transmitted (S12). The processing of monitoring reception of the SS timing information may be exemplarily performed by control section 204 (see FIG. 3) of UE 20.

When the SS timing information is received from macro base station 10, UE 20 attempts to perform SS detection processing at the timing or the time range corresponding to the received SS timing information (e.g., see FIG. 10) (S17 in FIG. 11).

In other words, UE 20 controls the timing to try the SS detection processing to the timing or the time range corresponding to the SS timing information received from macro base station 10. The SS detection processing may be exemplarily performed by control section 204 (see FIG. 3) of UE 20.

In the processing of monitoring reception of the SS timing information, when the SS timing information is not received from macro base station 10 within a predetermined period of time, UE 20 may transmit UL transmission data to macro base station 10 in a user plane (U-plane) that has been connected to macro base station 10 using DC, for example. The processing of transmitting the UL transmission data may be exemplarily performed through transmission signal generation section 207 of UE 20.

Small base station 30 that performs SS transmission is not necessarily limited to small base station 30 that has received the originating signal. One or more small base station 30 including small base station 30 that has received the originating signal may perform the SS transmission.

As described above, unlike scenario A, even if macro base station 10 does not know the position of UE 20, it is possible to suppress transmission of the SS in the service area of small base station 30 in which no UE 20 exists according to scenario B. Therefore, an increase in power consumption of small base station 30 can be suppressed.

Further, macro base station 10 notifies UE 20 positioned in the service area of small base station 30 of the SS timing information of small base station 30, whereby the SS detection timing or the SS detection range of UE 20 can be controlled. Therefore, an increase in power consumption of UE 20 can be suppressed.

### <Supplementary Matters>

Supplementary matters to be described below are common to scenarios A and B described above.

### (Supplementary Matter 1)

The SS detection timing (or range) in UE 20 is preferably corrected even after UE 20 detects the SS transmitted by small base station 30 and succeeds in connection to small base station 30 in scenarios A and B so that out-of-synchronization is suppressed.

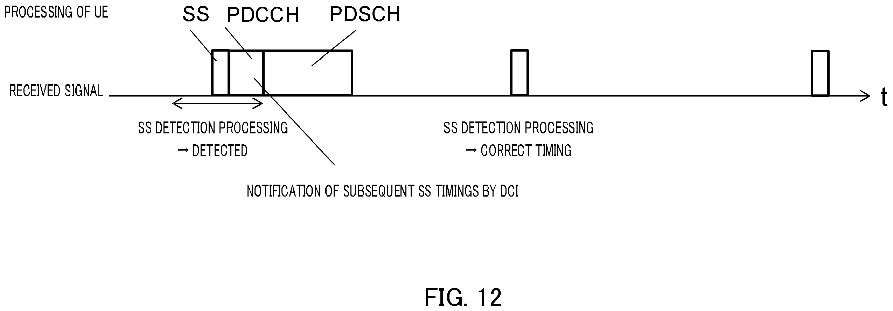

For example, as schematically illustrated in FIG. 12, macro base station 10 may notify UE 20 of second SS timing information transmitted after UE 20 succeeds in detection of a first SS (including the next and subsequent timings) using, for example, DCI of the PDCCH. UE 20 may correct the timing or the range at which execution of the SS detection processing is tried based on the SS timing information notified through the PDCCH.

All of a plurality of SSs exemplified in FIG. 12 may be transmitted from the same small base station 30, or all of or a part of the SSs may be transmitted from different small base stations 30. In the latter case, UE 20 can detect the presence of the plurality of small base stations 30, and can prepare for a handover (HO) between service areas of the plurality of small base stations 30, for example.

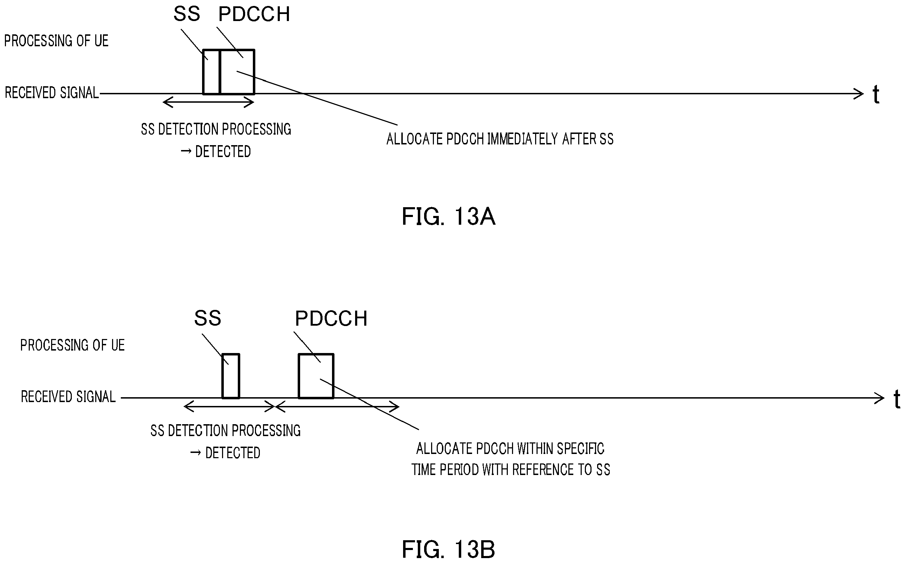

Here, in the single carrier scheme, the PDCCH, PDSCH, RS, and the like can be flexibly configured in the time domain as described above, whereby the PDCCH for notifying the SS timing information may be allocated immediately after the SS in the time domain as schematically exemplified in FIG. 13A, or may be allocated within a specific time period from immediately after the SS in the time domain as exemplified in FIG. 13B.

The "specific time period" may be exemplarily indicated by relative time with reference to the SS timing. For example, in the case of FIG. 13B, the PDCCH may be set to be allocated within N seconds, within N samples, within N slots, within N mini slots, or within N symbols from immediately after a certain SS. The character "N" is exemplarily an integer of 1 or more.

As exemplified in FIG. 13A, when the PDCCH is allocated immediately after the SS, UE 20 demodulates and decodes the received signal following successful detection of the SS, whereby UE 20 is available to identify the next and the subsequent SS timing information.

As exemplified in FIG. 13B, in the case where the PDCCH is set to be allocated within a specific time period from immediately after the SS, UE 20 executes blind decoding in the limited time range, whereby UE 20 is available to identify the next and the subsequent SS timing information.

### (Supplementary Matter 2)

In a case where, in scenarios A and B, UE 20 detects the SS transmitted by small base station 30, succeeds in connection to small base station 30, and then UE 20 has left away from the service area of small base station 30, small base station 30 may stop the SS transmission.

For example, in scenario A, macro base station 10 can detect that no UE 20 exists in any service area of small base station 30 according to the area determination described above. This detection may be referred to as "leaving-away detection" for convenience.

In response to the leaving-away detection, macro base station 10 may instruct corresponding small base station 30 to stop the SS transmission. Small base station 30 may stop the SS transmission by the instruction for stopping the SS transmission received from macro base station 10. Further, macro base station 10 may instruct UE 20 for which the leaving-away is detected to reset the SS timing information.

In scenario B, small base station 30 may detect, based on a predetermined reception quality indicator such as intensity of radio waves received from UE 20, that no UE 20 exists in the service area of small base station 30 or, even if UE 20 exists, that the probability of successful reception of the synchronization signal is low. This detection may also be regarded as an example of the leaving-away detection of UE 20.

In response to the leaving-away detection of UE 20, small base station 30 may stop the SS transmission. Alternatively or additionally, small base station 30 may notify macro base station 10 of the leaving-away detection in response to the leaving-away detection. Macro base station 10 may instruct small base station 30 to stop the SS transmission in response to the notification of the leaving-away detection from small base station 30, and may instruct UE 20 for which the leaving-away is detected to reset the SS timing information.

In both of scenarios A and B, the reset instruction from macro base station 10 to UE 20 in response to the leaving-away detection may be exemplarily transmitted in the C-plane that has been connected to UE 20 in macro cell 100. Either higher layer signaling such as MAC signaling and RRC or physical layer signaling (e.g., using DCI of PDCCH) may be exemplarily applied to the transmission of the reset instruction.

### <Conclusion>

As described above, UE 20 according to scenarios A and B receives, from macro base station 10, information on the SS timing transmitted from small base station 30 positioned in macro cell 100, and controls the timing for trying to perform the SS detection processing based on the received information, whereby it is not necessary to perform the SS detection processing when UE 20 is not positioned in the service area of small base station 30. Therefore, unnecessary detection of synchronization signals performed by UE 20 can be suppressed, whereby an increase in power consumption of UE 20 can be suppressed.

In scenario A, the SS timing information to be transmitted to UE 20 is generated based on the SS transmission instruction transmitted to small base station 30 from macro base station 10 determining that UE 20 is positioned in the service area of small base station 30. Therefore, delay in transmission of the SS timing information to UE 20 can be minimized.

In scenario B, in response to small base station 30 receiving the originating signal transmitted by UE 20, the SS is transmitted from the base station 30. The SS timing information addressed to UE 20 is then generated in macro base station 10 based on the notification from the base station 30 to macro base station 10. Therefore, unlike scenario A, even if macro base station 10 does not know the position of UE 20, an increase in power consumption of UE 20 can be suppressed.

Further, in both of scenarios A and B, as exemplified in FIG. 12, UE 20 can correct the timing for trying to detect the second SS based on the information on the second SS timing received from small base station 30 after detection of the first SS. Therefore, the incidence of out-of-synchronization after the detection of the first SS can be reduced.

The above is a technical matters focusing on UE 20. Focusing on small base station 30, when UE 20 does not exist in the service area of small base station 30, small base station 30 does not need to transmit the SS (in other words, it can be stopped), whereby an increase in power consumption of small base station 30 can be suppressed.

The embodiments of the present invention have been described above.

### (Hardware Configuration)

Note that the block diagrams used to describe the embodiments illustrate blocks based on functions. Those functional blocks (constituent sections) are implemented by any combination of hardware and/or software. A means for implementing the functional blocks is not particularly limited. That is, the functional blocks may be implemented by one physically and/or logically coupled apparatus, or may be implemented by a plurality of apparatuses in which two or more physically and/or logically separated apparatuses are directly and/or indirectly connected (e.g., via wires and/or wirelessly).

For example, the radio base station, the user terminal, and the like according to an embodiment of the present invention may function as a computer that executes processing of a radio communication method of the present invention. FIG. 14 is a diagram illustrating an exemplary hardware configuration of the radio base station and the user terminal according to an embodiment of the present invention. Radio base station 10 and user terminal 20 as described above may be physically constituted as a computer apparatus including processor 1001, memory 1002, storage 1003, communication apparatus 1004, input apparatus 1005, output apparatus 1006, bus 1007, and the like.

Note that the term "apparatus" in the following description can be replaced with a circuit, a device, a unit, or the like. The hardware configurations of radio base station 10 and of user terminal 20 may include one apparatus or a plurality of apparatuses illustrated in FIG. 14, or may not include part of the apparatuses.

For example, although only one processor 1001 is illustrated, there may be a plurality of processors. The processing may be executed by one processor, or the processing may be executed by one or more processors at the same time, in succession, or in another manner. Note that processor 1001 may be implemented by one or more chips.

The functions in radio base station 10 and user terminal 20 are implemented by predetermined software (program) loaded into hardware, such as processor 1001, memory 1002, and the like, according to which processor 1001 performs the arithmetic and controls communication performed by communication apparatus 1004 or reading and/or writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, scheduler 101, control sections 110 and 204, transmission signal generation sections 102 and 207, coding and modulation sections 103 and 208, mapping sections 104 and 209, channel estimation sections 111 and 205, demodulation and decoding sections 112 and 206, and the like may be implemented by processor 1001.

Processor 1001 reads out a program (program code), a software module, or data from storage 1003 and/or communication apparatus 1004 to memory 1002, and executes various types of processing according to the read-out program or the like. The program used is a program for causing the computer to execute at least part of the operation described in the embodiments. For example, scheduler 101 of radio base station 10 may be implemented by a control program stored in memory 1002 and operated by processor 1001, and the other functional blocks may also be implemented in a similar manner. While it has been described that the various types of processing as described above are executed by one processor 1001, the various types of processing may be executed by two or more processors 1001 at the same time or in succession. Processor 1001 may be implemented by one or more chips. Note that the program may be transmitted from a network through a telecommunication line.

Memory 1002 is a computer-readable recording medium, and may be composed of, for example, at least one of a Read Only Memory (ROM), an Erasable Programmable ROM (EPROM), an Electrically Erasable Programmable ROM (EEPROM), and a Random Access Memory (RAM). Memory 1002 may be referred to as a register, a cache, a main memory (main storage apparatus), or the like. Memory 1002 can save a program (program code), a software module, and the like that can be executed to carry out the radio communication method according to an embodiment of the present invention.

Storage 1003 is a computer-readable recording medium, and may be composed of, for example, at least one of an optical disk such as a Compact Disc ROM (CD-ROM), a hard disk drive, a flexible disk, a magneto-optical disk (e.g., a compact disc, a digital versatile disc, or a Blu-ray (registered trademark) disc), a smart card, a flash memory (e.g., a card, a stick, or a key drive), a floppy (registered trademark) disk, and a magnetic strip. Storage 1003 may also be referred to as an auxiliary storage apparatus. The storage medium as described above may be a database, server, or other appropriate media including memory 1002 and/or storage 1003.

Communication apparatus 1004 is hardware (transmission and reception device) for communication between computers through a wired and/or wireless network, and is also called, for example, a network device, a network controller, a network card, or a communication module. For example, transmission sections 106 and 211, antennas 107 and 201, reception sections 108 and 202, and the like as described above may be implemented by communication apparatus 1004.

Input apparatus 1005 is an input device (e.g., a keyboard, a mouse, a microphone, a switch, a button, or a sensor) that receives input from the outside. Output apparatus 1006 is an output device (e.g., a display, a speaker, or an LED lamp) that performs output to the outside. Note that input apparatus 1005 and output apparatus 1006 may be integrated (e.g., a touch panel).

The apparatuses, such as processor 1001 and memory 1002, are connected by bus 1007 for communication of information. Bus 1007 may be composed of a single bus or by buses different among the apparatuses.

Furthermore, radio base station 10 and user terminal 20 may include hardware, such as a microprocessor, a Digital Signal Processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented by at least one of those pieces of hardware.

### (Notification and Signaling of Information)

The notification of information is not limited to the aspects or embodiments described in the present specification, and the information may be notified by another method. For example, the notification of information may be carried out by one or a combination of physical layer signaling (e.g., Downlink Control Information (DCI) and Uplink Control Information (UCI)), higher layer signaling (e.g., Radio Resource Control (RRC) signaling, Medium Access Control (MAC) signaling, broadcast information (Master Information Block (MIB) and System Information Block (SIB))), and other signals. The RRC signaling may be referred to as an RRC message, and may be, for example, an RRC connection setup message, an RRC connection reconfiguration message, or the like.

### (Adaptive System)

The aspects and embodiments described in the present specification may be applied to a system using Long Term Evolution (LTE), LTE-Advanced (LTE-A), SUPER 3G, IMT-Advanced, 4G, 5G, Future Radio Access (FRA), W-CDMA (registered trademark), GSM (registered trademark), CDMA2000, Ultra Mobile Broadband (UMB), IEEE 802.11 (Wi-Fi), IEEE 802.16 (WiMAX), IEEE 802.20, Ultra-WideBand (UWB), Bluetooth (registered trademark), or other appropriate systems and/or to a next-generation system extended based on the above systems.

### (Processing Procedure etc.)

The orders of the processing procedures, the sequences, the flow charts, and the like of the aspects and embodiments described in the present specification may be changed as long as there is no contradiction. For example, elements of various steps are presented in exemplary orders in the methods described in the present specification, and the methods are not limited to the presented specific orders.

### (Operation of Base Station)

Specific operations described in the present specification as being performed by the base station (radio base station) may be performed by an upper node in some cases depending on the situation. Various operations performed for communication with a terminal in a network constituted by one network node or a plurality of network nodes including a base station can be obviously performed by the base station and/or a network node other than the base station (examples include, but not limited to, Mobility Management Entity (MME) and Serving Gateway (S-GW)). Although there is one network node in addition to the base station in the case exemplified above, a plurality of other network nodes may be combined (e.g., MME and S-GW).

### (Direction of Input and Output)

The information, the signals, and the like can be output from a higher layer (or a lower layer) to a lower layer (or a higher layer). The information, the signals, and the like may be input and output through a plurality of network nodes.

### (Handling of Input/Output Information etc.)

The input and output information and the like may be saved in a specific place (e.g., memory) or may be managed by a management table. The input and output information and the like can be overwritten, updated, or additionally written. The output information and the like may be deleted. The input information and the like may be transmitted to another apparatus.

### (Determination Method)

The determination may be made on the basis of a value expressed by one bit (0 or 1), on the basis of a Boolean value (true or false), or on the basis of comparison with a numerical value (e.g., comparison with a predetermined value).

### (Software)

Regardless of whether the software is called software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, and the like may be transmitted and received through a transmission medium. For example, when the software is transmitted from a website, a server, or another remote source by using a wired technique, such as a coaxial cable, an optical fiber cable, a twisted pair, and a digital subscriber line (DSL), and/or a wireless technique, such as an infrared ray, a radio wave, and a microwave, the wired technique and/or the wireless technique is included in the definition of the transmission medium.

### (Information and Signals)

The information, the signals, and the like described in the present specification may be expressed by using any of various different techniques. For example, data, instructions, commands, information, signals, bits, symbols, chips, and the like that may be mentioned throughout the descriptions above may be expressed by one or an arbitrary combination of voltage, current, electromagnetic waves, magnetic fields, magnetic particles, optical fields, and photons.

Note that the terms described in the present specification and/or the terms necessary to understand the present specification may be replaced with terms with the same or similar meaning. For example, the channel and/or the symbol may be a signal. The signal may be a message. The component carrier (CC) may be called a carrier frequency, a cell, or the like.

### ("System" and "Network")

The terms "system" and "network" used in the present specification can be interchangeably used.

### (Names of Parameters and Channels)

The information, the parameters, and the like described in the present specification may be expressed by absolute values, by values relative to predetermined values, or by other corresponding information. For example, radio resources may be indicated by indices.

The names used for the parameters described above are not limited in any respect. Furthermore, the numerical formulas and the like using those parameters may be different from the ones explicitly disclosed in the present specification. Various channels (e.g., PUCCH and PDCCH) and information elements (e.g., TPC) can be identified by any suitable names, and various names assigned to those various channels and information elements are not limited in any respect.

### (Base Station)

The base station (radio base station) can accommodate one cell or a plurality of (e.g., three) cells (also called sector). When the base station accommodates a plurality of cells, the entire coverage area of the base station can be divided into a plurality of smaller areas, and each of the smaller areas can provide a communication service based on a base station subsystem (e.g., small base station for indoor, remote radio head (RRH)). The term "cell" or "sector" denotes part or all of the coverage area of the base station and/or of the base station subsystem that perform the communication service in the coverage. Furthermore, the terms "base station", "eNB", "gNB", "cell", and "sector" can be interchangeably used in the present specification. The base station may be called a fixed station, a NodeB, an eNodeB (eNB), a gNodeB, an access point, a small cell, or the like. The small cell is an example of a cell with a coverage smaller than that of a macro cell. The small cell may be called differently depending on the coverage area. For example, a small cell may be referred to as a "femto cell", a "pico cell", a "microcell", a "nanocell", a "metro cell", a "home cell", or the like. The term "cell" or "sector" may indicate not only the individual geographical range in which the base station provides a radio service but also part of the communication function managed by the base station for communicating with the terminal in the individual geographical range.

### (Terminal)

The user terminal may be called, by those skilled in the art, a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or User Equipment (UE), or may be called using some other appropriate terms. The terminal may be a fixed terminal whose position does not change, or may be a mobile terminal whose position changes. As a non-limiting example, the terminal may be a mobile terminal such as a mobile phone, a smartphone, a tablet terminal, or the like. Further, the terminal may be an Internet of Things (IoT) terminal. Communication functions can be installed in various "objects" using the IoT. The various "objects" having the communication functions can be connected to the Internet, a radio access network, and the like to perform communication. For example, an IoT terminal may include a sensor device having a radio communication function, a meter (measure), and the like. The terminal may be any monitoring apparatus such as a sensor device, a monitoring camera including a meter, and a fire alarm. The radio communication between a terminal that is an IoT terminal such as a monitoring apparatus and base station 2 may be referred to as Machine Type Communications (MTC). Accordingly, the terminal may be referred to as a "MTC device".

### (Meaning and Interpretation of Terms)

As used herein, the term "determining" may encompass a wide variety of actions. For example, "determining" may be regarded as judging, calculating, computing, processing, deriving, investigating, looking up (e.g., looking up in a table, a database or another data structure), ascertaining, and the like. Also, "determining" may be regarded as receiving (e.g., receiving information), transmitting (e.g., transmitting information), inputting, outputting, accessing (e.g., accessing data in a memory), and the like. Also, "determining" may be regarded as resolving, selecting, choosing, establishing, comparing, and the like. That is, "determining" may be regarded as determining a certain type of action.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection, or may be a combination of physical and logical coupling or connection. When the terms are used in the present specification, two elements can be considered to be "connected" or "coupled" to each other by using one or more electrical wires, cables, and/or printed electrical connections or by using electromagnetic energy, such as electromagnetic energy with a wavelength of a radio frequency domain, a microwave domain, or an optical (both visible and invisible) domain that are non-limiting and non-inclusive examples.

The reference signal can also be abbreviated as RS and may also be called a pilot depending on the applied standard. Further, the DMRS may be referred to as another corresponding term, such as a demodulation RS and DM-RS.

The description "based on" used in the present specification does not mean "based only on", unless otherwise specifically stated. In other words, the description "based on" means both of "based only on" and "based at least on".

The "section" in the configuration of each apparatus may be replaced with "means", "circuit", "device", or the like.

The terms "including", "comprising", and modifications of those terms are intended to be inclusive just like the term "having", as long as the terms are used in the present specification or the appended claims. Furthermore, the term "or" used in the present specification or the appended claims is not intended to be an exclusive OR.

The radio frame may be constituted by one frame or a plurality of frames in the time domain. The one frame or each of the plurality of frames may be called a subframe, a time unit, or the like in the time domain. The subframe may be further constituted by one slot or a plurality of slots in the time domain. The slot may be further constituted by one symbol or a plurality of symbols (Orthogonal Frequency Division Multiplexing (OFDM) symbol, Single Carrier-Frequency Division Multiple Access (SC-FDMA) symbol, or the like) in the time domain.

The radio frame, the subframe, the slot, the mini slot, and the symbol indicate time units in transmitting signals. The radio frame, the subframe, the slot, the mini slot, and the symbol may be called by other corresponding names.

For example, in the LTE system, the base station creates a schedule for assigning radio resources (such as frequency bandwidth that can be used by each mobile station and transmission power) to each mobile station. The minimum time unit of scheduling may be called a Transmission Time Interval (TTI).

For example, one subframe, a plurality of continuous subframes, one slot, or one mini slot may be called a TTI.

The resource unit is a resource assignment unit in the time domain and the frequency domain, and the resource unit may include one subcarrier or a plurality of continuous subcarriers in the frequency domain. In addition, the resource unit may include one symbol or a plurality of symbols in the time domain, and may have a length of one slot, one mini slot, one subframe, or one TTI. One TTI and one subframe may be constituted by one resource unit or a plurality of resource units. The resource unit may be called a resource block (RB), a physical resource block (PRB: Physical RB), a PRB pair, an RB pair, a scheduling unit, a frequency unit, or a subband. The resource unit may be constituted by one RE or a plurality of REs. For example, one RE only has to be a resource smaller in unit size than the resource unit serving as a resource assignment unit (e.g., one RE only has to be a minimum unit of resource), and the naming is not limited to RE.

The structure of the radio frame described above is illustrative only, and the number of subframes included in the radio frame, the number of slots included in the subframe, the number of mini slots included in the subframe, the numbers of symbols and resource blocks included in the slot, and the number of subcarriers included in the resource block can be changed in various ways.

When articles, such as "a", "an", and "the" in English language, are added by translation in the entire disclosure, the articles include plural forms unless otherwise clearly indicated by the context.

### (Variations etc. of Aspects)

The aspects and embodiments described in the present specification may be independently used, may be used in combination, or may be switched and used along the execution. Furthermore, notification of predetermined information (e.g., notification indicating "it is X") is not limited to explicit notification, and may be performed implicitly (e.g., by not notifying the predetermined information).

While the present invention has been described in detail, it is obvious to those skilled in the art that the present invention is not limited to the embodiments described in the present specification. Modifications and variations of the aspects of the present invention can be made without departing from the spirit and the scope of the present invention defined by the description of the appended claims. Therefore, the description of the present specification is for the purpose of illustration, and does not limit the present invention in any respect.

### Industrial Applicability

An aspect of the present invention is useful for a mobile communication system.

### Reference Signs List

10, 30 Radio base station
20 User terminal
100, 200 Radio communication area
101 Scheduler
102, 207 Transmission signal generation section
103, 208 Coding and modulation section
104, 209 Mapping section
106, 211 Transmission section
107, 201 Antenna
108, 202 Reception section
110, 204 Control section
111, 205 Channel estimation section
112, 206 Demodulation and decoding section

## Claims

1. A user terminal, comprising:
a reception section that receives, in a second radio communication area formed by a second base station in a first radio communication area of a first base station, information on a timing of a synchronization signal transmitted from the second base station from the first base station; and
a control section that controls a timing for trying to detect the synchronization signal based on the information on the timing.

2. The user terminal according to claim 1, wherein
the synchronization signal is transmitted from the second base station by the first base station instructing the second base station to transmit the synchronization signal when the first base station determines that the user terminal is positioned in the second radio communication area, and
the information on the timing is information generated based on the instruction for transmitting the synchronization signal.

3. The user terminal according to claim 1, further comprising:
a transmission section that transmits an originating signal indicative of presence of the user terminal, wherein
the synchronization signal is transmitted from the second base station when the second base station receives the originating signal, and
the information on the timing is information generated based on notification from the second base station that has received the originating signal to the first base station.

4. The user terminal according to any one of claims 1 to 3, wherein
the control section corrects, basedon information on a timing of a second synchronization signal received from the second base station after the synchronization signal referred to as a first synchronization signal is detected, a timing for trying to detect the second synchronization signal.

5. A base station which is a first base station that forms a first radio communication area, the base station comprising:
a detection section that detects that a user terminal is positioned in a second radio communication area of a second base station, the second base station being in the first radio communication area and forming the second radio communication area; and
a transmission section that transmits, to the user terminal, information on a timing of a synchronization signal transmitted from the second base station in response to detection performed by the detection section.

6. A radio communication method, comprising:
transmitting, from a first base station, information on a timing of a synchronization signal transmitted from a second base station in a first radio communication area of the first base station, to a user terminal positioned in a second radio communication area formed by the second base station; and
controlling, at the user terminal, a timing for trying to detect the synchronization signal based on the information on the timing.
